# EUROPEAN PATENT APPLICATION

(11) **EP 4 626 113 A1**
(43) Date of publication of application: **01.10.2025**
(21) Application number: 24813924.8
(22) Date of filing: 12.04.2024
(51) Int. Cl.: H04W 72/21, H04W 72/0446

(54) **INFORMATION TRANSMISSION METHOD, COMMUNICATION NODE, AND STORAGE MEDIUM**

(30) Priority: 26.05.2023 CN 202310609547
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN); LIU, Kun, Shenzhen, Guangdong 518057 (CN)
(74) Representative: Savi, Massimiliano
(86) International application number: PCT/CN2024/087546
(87) International publication number: WO 2024/244718

(57) **Abstract**

Embodiments of the present application provide an information transmission method, a communication node, and a storage medium. A first communication node receives J pieces of first information sent by J second communication nodes, and then sends J pieces of second information in one transmission unit, wherein the J pieces of second information and the J pieces of first information are in one-to-one correspondence. A second communication node can receive J pieces of first information of a first communication node, determine a transmission resource of the present node according to second information, which corresponds to the present node, among the J pieces of first information, and then send third information by using the transmission resource.

## Description

### CROSS-REFERENCE TO RELATED APPLICATION

This application is filed on the basis of Chinese patent application No. 202310609547.0 filed May 26, 2023, and claims priority to the Chinese patent application, the entire contents of which are incorporated herein by reference.

### TECHNICAL FIELD

The present disclosure relates to the technical field of communications, and more particularly, to an information transmission method, a first communication node, a second communication node, a computer-readable storage medium, and a computer program product.

### BACKGROUND

In passive Internet of Things (IoT) communication technologies, a network device side generally typically manages the access and identification of terminal devices using methods such as time-division multiplexing, code-division multiplexing, or a combination of both. How a network device notifies terminal devices within its coverage to send uplink information to avoid conflicts between uplink information of multiple terminal devices is a technical problem to be solved at present.

### SUMMARY

The present disclosure provides an information transmission method, a first communication node, a second communication node, a computer-readable storage medium, and a computer program product, to reduce information conflicts in a network.

In accordance with a first aspect of the present disclosure, an embodiment provides an information transmission method, applied to a first communication node, the method including:
receiving J pieces of first information sent by J second communication nodes; and
sending J pieces of second information in one transmission unit, where the J pieces of second information and the J pieces of first information are in one-to-one correspondence, and J is greater than or equal to 1.

In accordance with a second aspect of the present disclosure, an embodiment provides an information transmission method, applied to a second communication node, the method including:
sending first information;
receiving a transmission unit, where the transmission unit includes J pieces of second information;
determining a transmission resource according to a position of the second information corresponding to the first information in the J pieces of second information; and
sending third information using the transmission resource.

In accordance with a third aspect of the present disclosure, an embodiment provides an information transmission method, applied to a second communication node, the method including:
sending first information;
receiving at least one of a transmission resource reselection command and retransmission user indication information; and
determining a transmission resource and sending the first information using the transmission resource, where the transmission resource includes at least one of: a time-domain resource, a frequency-domain resource, or a spreading sequence.

In accordance with a fourth aspect of the present disclosure, an embodiment provides an information transmission method, applied to a second communication node, the method including:
determining a spreading sequence;
sending first information to a first communication node using the spreading sequence;
receiving second information sent by the first communication node; and
in response to the second information being corresponding to the first information, sending third information to the first communication node using the spreading sequence,
where the first information is different from the third information.

In accordance with a fifth aspect of the present disclosure, an embodiment provides a first communication node, including:
one or more processors; and
a memory, storing one or more programs which, when executed by the one or more processors, cause the one or more processors to implement the information transmission method in accordance with the first aspect.

In accordance with a sixth aspect of the present disclosure, an embodiment provides a second communication node, including:
one or more processors; and
a memory, storing one or more programs which, when executed by the one or more processors, cause the one or more processors to implement the information transmission method in accordance with the second aspect, the third aspect, or the fourth aspect.

In accordance with a seventh aspect of the present disclosure, an embodiment provides a computer-readable storage medium, having a computer program stored therein, where the computer program, when executed by a processor, causes the processor to implement the information transmission method in accordance with the first aspect, the second aspect, the third aspect, or the fourth aspect.

In accordance with an eighth aspect of the present disclosure, an embodiment provides a computer program product, including a computer program or a computer instruction stored in a computer-readable storage medium, where the computer program or the computer instruction, when read from the computer-readable storage medium and executed by a processor of a computer device, causes the computer device to implement the information transmission method in accordance with the first aspect, the second aspect, the third aspect, or the fourth aspect.

In the embodiments of the present disclosure, a first communication node receives J pieces of first information sent by J second communication nodes, and then sends J pieces of second information in one transmission unit, where the J pieces of second information and the J pieces of first information are in one-to-one correspondence. A second communication node can receive the J pieces of first information from the first communication node, determine a transmission resource corresponding to the second communication node according to second information corresponding to the second communication node among the J pieces of first information, and then send third information using the transmission resource. According to the embodiments of the present disclosure, information conflicts between a plurality of second communication nodes can be avoided, the efficiency of identifying second communication nodes by the first communication node can be improved, and the network capacity can be increased.

### BRIEF DESCRIPTION OF DRAWINGS

FIG. 1 is a schematic architectural diagram of a communication system to which embodiments of the present disclosure are applicable;
FIG. 2 is a schematic flowchart of an information transmission method according to an embodiment of the present disclosure;
FIG. 3 is a schematic flowchart of an information transmission method according to an embodiment of the present disclosure;
FIG. 4 is a schematic flowchart of an information transmission method according to an embodiment of the present disclosure;
FIG. 5 is a schematic flowchart of an information transmission method according to an embodiment of the present disclosure;
FIG. 6 is a schematic flowchart of an information transmission method according to Example 1 in embodiments of the present disclosure;
FIG. 7 is a schematic flowchart of an information transmission method according to Example 2 in embodiments of the present disclosure;
FIG. 8 is a schematic flowchart of an information transmission method according to Example 3 in embodiments of the present disclosure;
FIG. 9 is a schematic flowchart of an information transmission method according to Example 4 in embodiments of the present disclosure;
FIG. 10 is a schematic flowchart of an information transmission method according to Example 5 in embodiments of the present disclosure;
FIG. 11 is a schematic structural diagram of a first communication node according to an embodiment of the present disclosure; and
FIG. 12 is a schematic structural diagram of a second communication node according to an embodiment of the present disclosure.

### DETAILED DESCRIPTION

In order for those having ordinary skills in the art to better understand the technical schemes of the present disclosure, an information transmission method, a first communication node, a second communication node, a computer-readable storage medium, and a computer program product provided by the present disclosure are described in detail below with reference to the accompanying drawings.

Example embodiments are described more fully below with reference to the accompanying drawings, but the example embodiments described may be embodied in different forms and the present disclosure is not to be construed as being limited to the embodiments set forth herein. Rather, these embodiments are provided such that the present disclosure will be thorough and complete, and will fully convey the scope of the present disclosure to those having ordinary skills the art.

As used herein, the term "and/or" includes any and all combinations of one or more of associated items listed.

The terminology used herein is used to describe particular embodiments only and is not intended to limit the present disclosure. As used herein, the singular forms "a," "an," and "the" are intended to include the plural forms as well, unless the context clearly dictates otherwise. It will also be understood that when used in the description, the terms "include," "comprise," and/or "made of" as well as their variants mean that the stated features, integers, steps, operations, elements, and/or components are present, but do not exclude the presence or addition of one or more other features, integers, steps, operations, elements, components, and/or groups thereof.

In the following descriptions, the term "some embodiments" describes subsets of all possible embodiments, but it may be understood that "some embodiments" may be the same subset or different subsets of all the possible embodiments, and can be combined with each other without conflict.

Unless otherwise defined, the meanings of all the terms (including technical and scientific terms) used herein are intended to be the same as those commonly understood by those having ordinary skills in the art. It will also be understood that the terms such as those defined in common dictionaries should be construed as having meanings consistent with their meanings in the context of the related art and the present disclosure, and should not be construed as having idealized or over-formal meanings, unless otherwise expressly defined herein.

In passive Internet of Things (IoT) communication technologies, a network device generally implements the access and identification of terminal devices through time-division multiplexing. When the network device identifies terminal devices within its coverage, a plurality of terminal devices send uplink information in different slots to avoid interference between the plurality of terminal devices. In addition, the network device may also implement the access and identification of terminal devices through a combination of time-division multiplexing and code-division multiplexing. Because different terminal devices may use different spreading sequences, these terminal devices may transmit uplink information concurrently at the same time, thereby improving the efficiency of terminal device identification and increasing the network capacity. However, problems such as how the network device notifies the plurality of terminal devices to transmit subsequent uplink information after detecting the uplink information of the plurality of terminal devices, how the terminal devices determine resources to be used to transmit the subsequent uplink information, and how the network device instructs the subsequent operation of a plurality of terminal devices with conflicting uplink information require appropriate schemes.

In view of the above, embodiments of the present disclosure provide an information transmission method, a first communication node, a second communication node, a computer-readable storage medium, and a computer program product, to reduce information conflicts in a network.

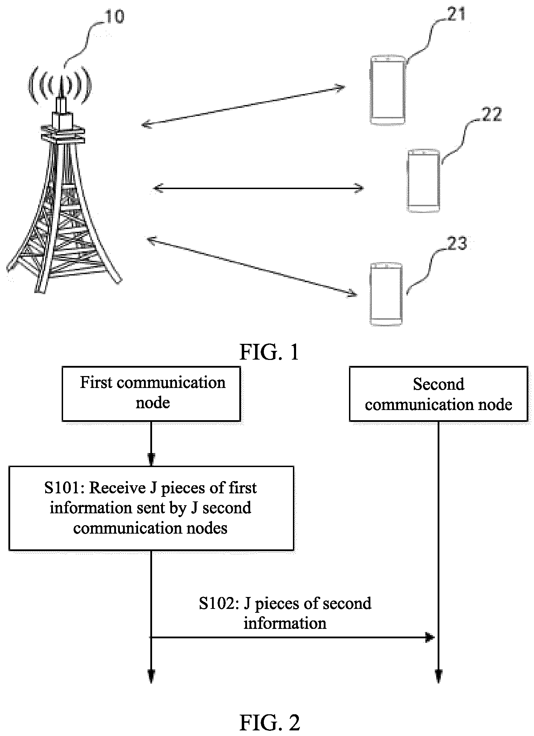

FIG. 1 is a schematic architectural diagram of a communication system to which embodiments of the present disclosure are applicable. The communication system in FIG. 1 includes a plurality of communication devices, which may wirelessly communicate with each other using air interface resources. The communication devices include at least one first communication node and at least one second communication node. In the example of FIG. 1, the communication devices include a first communication node 10, a second communication node 21, a second communication node 22, and a second communication node 23. Wireless communication between the communication devices include: wireless communication between a first communication node and a second communication node, wireless communication between first communication nodes, or wireless communication between second communication nodes.

In the embodiments of the present disclosure, the first communication node may be a network device. The network device may also be referred to as a base station. The base station may be an Evolutional NodeB (eNB or eNodeB) in Long Term Evolution (LTE) or Long Term Evolution advanced (LTEA), a base station device in a 5th generation (5G) network, or a base station in a future communication system, etc. The base station may include various macro base stations, micro base stations, home base stations, radio remote units, routers, Reconfigurable Intelligent Surfaces (RISs), Wireless Fidelity (WI-FI) devices, primary cells, secondary cells, and network-side devices, and may also be a location management function (LMF) device. This is not limited in the embodiments of the present disclosure.

In the embodiments of the present disclosure, the second communication node may be a terminal device (or referred to as a terminal). The terminal is a device with a wireless transceiver function, which may be deployed on land, including indoor or outdoor, handheld, wearable, or vehicle-mounted forms; deployed on the water (such as ships, etc.); or deployed in the air (such as airplanes, balloons, and satellites, etc.). The terminal device may be a mobile phone, a tablet computer (Pad), a computer with a wireless transceiver function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The application scenarios are not limited in the embodiments of the present disclosure. Sometimes, the terminal may also be referred to as a user, a User Equipment (UE), an access terminal, a UE unit, a UE station, a mobile site, a mobile station, a remote station, a remote terminal, a mobile device, a UE terminal, a wireless communication device, a UE agent, a UE device, etc. This is not limited in the embodiments of the present disclosure.

It can be understood that the communication system described above is for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new service scenarios, the technical schemes provided in the embodiments of the present disclosure are also applicable to similar communication systems.

FIG. 2 is a schematic flowchart of an information transmission method according to an embodiment of the present disclosure. As shown in FIG. 2, the information transmission method includes the following steps S101 and S102.

At S101, a first communication node receives J pieces of first information sent by J second communication nodes.

In an example embodiment, a communication system includes one first communication node and J second communication nodes, and the J second communication nodes respectively send first information to the first communication node, such that the first communication node can receive J pieces of first information. The first information is used for triggering the first communication node to configure corresponding second information for the second communication nodes, and the second information indicates a transmission resource to be used by the second communication node to subsequently send uplink information.

In an example embodiment, the first information received by the first communication node includes a bit sequence, which may be a randomly generated sequence of a fixed length. For example, the first information includes a randomly generated bit sequence having a length of L (i.e., L bits), L being an integer greater than or equal to 1. The first information may further carry a node identifier corresponding to the second communication node, or may carry other indication information for identifying the first information.

In an example embodiment, the second communication node may determine a spreading sequence, spread the first information using the determined spreading sequence, and sends the spread first information. Different second communication nodes may send first information concurrently using different spreading sequences, thus achieving code-division multiplexing. The first communication node may detect first information based on a spreading sequence.

At S102, the first communication node sends J pieces of second information in one transmission unit, where the J pieces of second information and the J pieces of first information are in one-to-one correspondence, and J is greater than or equal to 1.

In the embodiments of the present disclosure, the transmission unit may be a physical channel, a data transmission block, or a command transmission block.

In an example embodiment, each of the J pieces of second information sent by the first communication node corresponds to first information sent by one second communication node. As such, after receiving the J pieces of second information from the first communication node, the second communication node can determine the second information corresponds to the second communication node according to the bit sequence having the length of L carried in the second information, and determine a transmission resource according to a position of the second information corresponding to the second communication node in the J pieces of second information. It should be noted that the bit sequence may be replaced by a node identifier or other indication information for identifying the first information.

For example, the content of second information is the same as that of first information corresponding to the second information. In other words, after receiving the first information, the first communication node sends the second information for confirmation, and if the second information received by the second communication node is the same as the sent first information, the second communication node determines that the second information corresponds to the second communication node.

In the embodiments of the present disclosure, the transmission resource at least includes one of: a sending time, a frequency-domain resource, or a spreading sequence. How the second communication node determines the transmission resource according to the second information will be described in detail in embodiments below.

According to the embodiments of the present disclosure, a first communication node sends J pieces of second information to second communication nodes in one transmission unit, such that each second communication node can determine a transmission resource according to a position of the second information corresponding to the second communication node in the J pieces of second information. Because the positions of the second information corresponding to the second communication nodes in the J pieces of second information are different, the transmission resources determined by the second communication nodes are also different. As such, the second communication nodes can send uplink information using different transmission resources, such that information conflicts between a plurality of second communication nodes can be avoided, the efficiency of identifying second communication nodes by the first communication node can be improved, and the network capacity can be increased.

Several example schemes will be described by way of example below.

Scheme 1: In an example embodiment, a second communication node spreads first information using a spreading sequence and sends the spread first information; a first communication node sends J pieces of second information in one transmission unit; and after receiving the J pieces of second information through the transmission unit, the second communication node determines whether second information corresponding to the first information exists among the J pieces of second information, and if yes, spreads third information using a spreading sequence, and sends the spread third information, where the spreading sequence used for the third information is the same as that used for the first information.

Scheme 2: In an example embodiment, a first communication node sends J pieces of second information in one transmission unit, where each of the J pieces of second information corresponds to one spreading sequence, for example, the J pieces of second information respectively correspond to spreading sequences having serial numbers from 0 to J-1. A second communication node receives the J pieces of second information. If determining that first information sent by the second communication node corresponds to an r-th piece of second information among the J pieces of second information, the second communication node determines a spreading sequence corresponding to the r-th piece of second information. The second communication node spreads third information using the determined spreading sequence and sends the spread third information, where 1≤r≤J.

Scheme 3: In an example embodiment, the first communication node further sends J pieces of spreading sequence information in the transmission unit. In other words, a first communication node sends J pieces of second information and J pieces of spreading sequence information in one transmission unit.

For example, the J pieces of second information and the J pieces of spreading sequence information may be arranged in the transmission unit in any of the following manners.

Arrangement manner 1: The second information and the spreading sequence information are sequentially alternately arranged in the transmission unit.

For example, the J pieces of second information are expressed as {a1, a2, ..., aJ}, the J pieces of spreading sequence information are expressed as {b1, b2, ..., bJ}, and the second information and the spreading sequence information are sequentially alternately arranged in the transmission unit, i.e., {a1, b1, a2, b2, ..., aJ, bJ}.

Arrangement manner 2: The spreading sequence information and the second information are sequentially alternately arranged in the transmission unit.

For example, the J pieces of second information are expressed as {a1, a2, ..., aJ}, the J pieces of spreading sequence information are expressed as {b1, b2, ..., bJ}, and the spreading sequence information and the second information are sequentially alternately arranged in the transmission unit, i.e., {b1, a1, b2, a2, ..., bJ, aJ}.

Arrangement manner 3: The J pieces of second information are arranged before the J pieces of spreading sequence information.

For example, the J pieces of second information are expressed as {a1, a2, ..., aJ}, the J pieces of spreading sequence information are expressed as {b1, b2, ..., bJ}, and the J pieces of second information are arranged before the J pieces of spreading sequence information in the transmission unit, i.e., {a1, a2, ..., aJ, b1, b2, ..., bJ}.

Arrangement manner 4: The J pieces of spreading sequence information are arranged before the J pieces of second information.

For example, the J pieces of second information are expressed as {a1, a2, ..., aJ}, the J pieces of spreading sequence information are expressed as {b1, b2, ..., bJ}, and the J pieces of spreading sequence information are arranged before the J pieces of second information in the transmission unit, i.e., {b1, b2, ..., bJ, a1, a2, ..., aJ}.

The J pieces of spreading sequence information respectively indicate different spreading sequences. A second communication node receives the J pieces of second information and the J pieces of spreading sequence information sent by the first communication node, determines a spreading sequence information corresponding to the second communication node according to a position of the second information corresponding to the second communication node in the J pieces of second information, and determines a spreading sequence according to the spreading sequence information, including: If the r-th piece of second information among the J pieces of second information corresponds to the first information sent by the second communication node, the second communication node determines a spreading sequence indicated by the r-th piece of spreading sequence information. The second communication node performs transmission of third information using the determined spreading sequence. In an example embodiment, the number J of pieces of second information sent in the transmission unit by the first communication node is indicated by a third parameter. The first communication node may send the third parameter to the second communication node, such that the second communication node may determine the number of pieces of second information according to the third parameter, and decode the second information.

For example, the first communication node receives first information sent by K second communication nodes, where K is greater than J. The first communication node determines according to the third parameter that the number of pieces of second information sent in one transmission unit is J. In this case, the first communication node selects J pieces of first information from the K pieces of first information, generates J pieces of second information corresponding to the J pieces of first information, and sends the J pieces of second information in one transmission unit; or the first communication node generates K pieces of second information corresponding to the K pieces of first information, selects J pieces of second information from the K pieces of second information, and sends the J pieces of second information in one transmission unit.

For example, the first communication node may send J pieces of second information to second communication nodes within its coverage in one transmission unit, and after receiving the J pieces of second information, each of the second communication nodes determines whether second information corresponding to the second communication node exists among the J pieces of second information.

In an example embodiment, before the first communication node receives the J pieces of first information sent by the J second communication nodes, the information transmission method further includes a following step S100.

At S100, a first parameter is sent, where the first parameter indicates whether to spread the first information using a spreading sequence.

In an example embodiment, the first communication node sends a first parameter to the second communication node, and when the first parameter indicates to spread the first information using a spreading sequence, the second communication node determines a spreading sequence from a preset spreading sequence set, spreads the first information using the determined spreading sequence, and sends the spread first information.

That the second communication node determines a spreading sequence from a preset spreading sequence set includes: the second communication node determines the spreading sequence according to an identification code (ID) of the second communication node, for example, a spreading sequence serial number s determined by the second communication node is equal to mod(v, C), where v is a decimal value corresponding to n bits in the ID of the second communication node, and C is the number of available spreading sequences; or the second communication node randomly selects a spreading sequence, where the spreading sequence determined by the second communication node is the selected spreading sequence.

When the number of second communication nodes is more than one, spreading the first information using spreading sequences can reduce conflicts between the first information sent by a plurality of second communication nodes.

Refer to Table 1, Table 1 is a set of spreading sequences provided in an embodiment of the present disclosure. Table 1 provides 16 spreading sequences each having a length of 4 and each including four complex elements.

**Table 1 Spreading sequences having a length of 4**

| Serial number | Spreading sequence |
|---|---|
| 0 | {1, 1, 1, 1} |
| 1 | {1, 1, -1, -1} |
| 2 | {1, -1, 1, -1} |
| 3 | {1, -1, -1, 1} |
| 4 | (1, 1, j, -j} |
| 5 | {1, 1, -j, j} |
| 6 | (1, -1, j, j} |
| 7 | {1, -1, -j, -j} |
| 8 | {1, j, 1, -j} |
| 9 | {1, j, -1, j} |
| 10 | {1, -j, 1, j} |
| 11 | {1, -j, -1, -j} |
| 12 | {1, j, j, -1} |
| 13 | {1, j, -j, 1} |
| 14 | {1, -j, j, 1} |
| 15 | {1, -j, -j, -1} |

Refer to Table 2, Table 2 is a set of spreading sequences provided in an embodiment of the present disclosure. Table 2 provides 16 spreading sequences each having a length of 6 and each including six complex elements.

**Table 2 Spreading sequences having a length of 6**

| Serial number | Spreading sequence |
|---|---|
| 0 | {1, 1, 1, 1, 1, 1} |
| 1 | {1, 1, 1, 1, -1, -1} |
| 2 | {1, 1, 1, -1, 1, -1} |
| 3 | {1, 1, 1, -1, -1, 1} |
| 4 | {1, 1, -1, 1, 1, -1} |
| 5 | {1, 1, -1, 1, -1, 1} |
| 6 | {1, 1, -1, -1, 1, 1} |
| 7 | {1, 1, -1, -1, -1, -1} |
| 8 | {1, -1, 1, 1, 1, -1} |
| 9 | {1, -1, 1, 1, -1, 1} |
| 10 | {1, -1, 1, -1, 1, 1} |
| 11 | {1, -1, 1, -1, -1, -1} |
| 12 | {1, -1, -1, 1, 1, 1} |
| 13 | {1, -1, -1, 1, -1, -1} |
| 14 | {1, -1, -1, -1, 1, -1} |
| 15 | {1, -1, -1, -1, -1, 1} |

In an example embodiment, spreading information using a spreading sequence includes: multiplying each item of data in the information by a spreading sequence having a length of L to obtain L items of spread data. For example, the first information includes H-1 items of data, expressed as {S₀, S₁, S₂,... S_{H-1}}, and data Sₕ is multiplied by a spreading sequence having a length of L, where h=1, 2, 3, ..., H-1. For example, an item of data d is multiplied by a spreading sequence {1, 1, -1, -1} having a length of 4 to obtain spread data {d, d, -d, -d}.

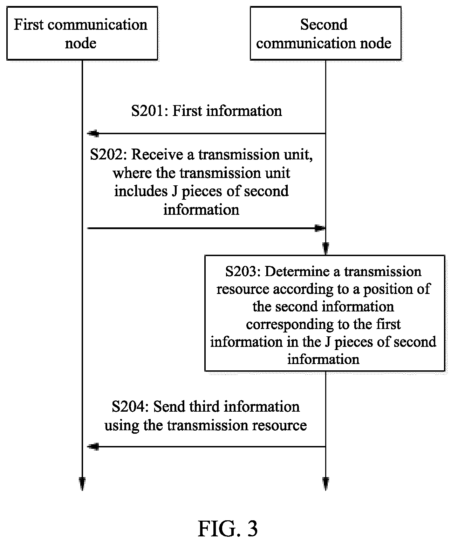

FIG. 3 is a schematic flowchart of an information transmission method according to an embodiment of the present disclosure. As shown in FIG. 3, the information transmission method includes the following steps S201 to S204.

At S201, a second communication node sends first information.

In an example embodiment, the first information includes a bit sequence having a length of L (i.e., L bits), where L is a fixed numerical value, and the bit sequence having the length of L may be randomly generated. In some other embodiments, the bit sequence having the length of L may be acquired based on an identification code ID of the second communication node or other information for identifying the second communication node.

In an example embodiment, the second communication node sends first information carrying a bit sequence having a length of L to a first communication node; and after successfully receiving the first information, the first communication node sends second information, where the second information is confirmation information for the first information, for example, the second information includes the bit sequence having the length of L in the first information.

At S202, the second communication node receives one transmission unit, where the transmission unit includes J pieces of second information.

In an example embodiment, each of the J pieces of second information carries a bit sequence having a length of L, and the bit sequences carried by the J pieces of second information are different.

If the first information sent by the second communication node matches one of the J pieces of second information, the matched second information is determined as second information corresponding to the first information. In some other embodiments, the bit sequence having the length of L carried by the second information may be replaced by a node identifier corresponding to the second communication node or other indication information for identifying the first information.

At S203, the second communication node determines a transmission resource according to a position of the second information corresponding to the first information in the J pieces of second information.

In an example embodiment, if the first information sent by the second communication node corresponds to an r-th piece of second information among the J pieces of second information, the second communication node determines a transmission resource according to the position information "r". The transmission resource at least includes one of: a sending time, a frequency-domain resource, or a spreading sequence.

At S204, the second communication node sends third information using the transmission resource.

In an example embodiment, the second communication node determines a sending time according to the position of the second information corresponding to the first information in the J pieces of second information, and then sends the third information to the first communication node at the determined sending time (i.e., time-domain resource).

In an example embodiment, the second communication node determines a frequency-domain resource (i.e., frequency) according to the position of the second information corresponding to the first information in the J pieces of second information, and then sends the third information to the first communication node on the determined frequency.

In an example embodiment, the second communication node determines a spreading sequence according to the position of the second information corresponding to the first information in the J pieces of second information, then uses the determined spreading sequence to spread the third information to be sent, and sends the spread third information to the first communication node.

It should be noted that the transmission resource determined by the second communication node according to the position of the second information corresponding to the first information in the J pieces of second information may be one or more types of resources.

For example, the second communication node determines a sending time and a spreading sequence according to the position of the second information corresponding to the first information in the J pieces of second information, then uses the determined spreading sequence to spread the third information to be sent, and sends the spread third information to the first communication node at the determined sending time.

For another example, the second communication node determines a frequency-domain resource and a spreading sequence according to the position of the second information corresponding to the first information in the J pieces of second information, then uses the determined spreading sequence to spread the third information to be sent, and sends the spread third information to the first communication node on the frequency-domain resource.

For another example, the second communication node determines a sending time and a frequency-domain resource according to the position of the second information corresponding to the first information in the J pieces of second information, and then sends the spread third information to the first communication node at the determined sending time and on the determined frequency-domain resource.

For another example, the second communication node determines a sending time, a frequency-domain resource, and a spreading sequence according to the position of the second information corresponding to the first information in the J pieces of second information, then uses the determined spreading sequence to spread the third information to be sent, and sends the spread third information to the first communication node at the determined sending time and on the determined frequency-domain resource.

In an example embodiment, determining a transmission resource according to a position of the second information corresponding to the first information in the J pieces of second information in S203 includes:
determining a sending time of the third information according to the position of the second information corresponding to the first information in the J pieces of second information.

In an example embodiment, determining a sending time of the third information according to the position of the second information corresponding to the first information in the J pieces of second information includes:
in response to the second information corresponding to the first information being an r-th piece of second information among the J pieces of second information, determining to send the third information after a delay of T0+(r-1)T after transmission of the transmission unit is completed, where 1≤r≤J, and T0 and T are each a preset time length or a time length indicated by a fourth parameter, i.e., T0 is a preset duration or a time length indicated by the fourth parameter, and T is a preset duration or a time length indicated by the fourth parameter.

In an example embodiment, a transmission end moment of the transmission unit carrying the J pieces of second information is a moment T1, and the second communication node sends the third information to the first communication node at a moment T2 after a delay of T0+(r-1)T starting from the moment T1.

In an example embodiment, a value of T0 is determined from a set of time lengths according to at least one of a subcarrier spacing and a type of the second communication node. Determining the value of T0 according to the subcarrier spacing includes: determining a corresponding value of T0 according to a value of the subcarrier spacing, where the value of T0 has a correspondence with the subcarrier spacing. Determining the value of T0 according to the type of the second communication node includes: determining a corresponding value of T0 according to the type of the second communication node, where the value of T0 has a correspondence with the type of the second communication node.

In an example embodiment, a value of T is determined from a set of time lengths according to at least one of a subcarrier spacing and a type of the second communication node. Determining the value of T according to the subcarrier spacing includes: determining a corresponding value of T according to a value of the subcarrier spacing, where the value of T has a correspondence with the subcarrier spacing. Determining the value of T according to the type of the second communication node includes: determining a corresponding value of T according to the type of the second communication node, where the value of T has a correspondence with the type of the second communication node.

In an example embodiment, the fourth parameter indicates at least one of T0 and T.

In an example embodiment, determining a transmission resource according to a position of the second information corresponding to the first information in the J pieces of second information in S203 includes:
in response to the second information corresponding to the first information being an r-th piece of second information among the J pieces of second information, determining to use a spreading sequence having a serial number of r-1 for the third information, where 1≤r≤J.

In an example embodiment, the second information corresponding to the first information sent by the second communication node is the third piece of second information among the J pieces of second information, a spreading sequence having a serial number of 2 is selected from the spreading sequence list shown in Table 1, and the third information is spread using the spreading sequence. A starting serial number of the spreading sequences is 0.

In an example embodiment, the transmission unit received by the second communication node further includes J pieces of spreading sequence information. In other words, one transmission unit received by the second communication node includes J pieces of second information and J pieces of spreading sequence information. Each piece of spreading sequence information indicates one spreading sequence.

In an example embodiment, determining a transmission resource according to a position of the second information corresponding to the first information in the J pieces of second information in S203 includes:
in response to the second information corresponding to the first information being an r-th piece of second information among the J pieces of second information, determining to use a spreading sequence indicated by an r-th piece of spreading sequence information among the J pieces of spreading sequence information for the third information, where 1≤r≤J.

In an example embodiment, the second communication node receives an information sequence {a1, b1, a2, b2, ..., aJ, bJ} in one transmission unit. According to a preset information arrangement mode that the second information and the spreading sequence information are sequentially alternately arranged in the transmission unit, the second communication node can learn that the odd-numbered information is the second information and the even-numbered information is the spreading sequence information in the information sequence. The second communication node matches the first information previously sent by the second communication node against the second information in the information sequence, and determines that the second information corresponding to the first information is the third piece of second information (i.e., a3) among the J pieces of second information. The second communication node acquires the third piece of spreading sequence information (i.e., b3) from the information sequence, then acquires a spreading sequence indicated by b3, and spreads the third information using the spreading sequence. For example, the spreading sequence indicated by b3 is the spreading sequence having a serial number of 4 in Table 1.

In an example embodiment, the second communication node determines whether to spread the third information using a spreading sequence, depending on whether a number of bits in an indication field is an integer multiple of L. The indication field includes at least one of the J pieces of second information and the J pieces of spreading sequence information, and L represents a number of bits of one piece of second information.

In an example, the number of bits in the indication field represents a total number of bits of the J pieces of second information in the transmission unit. In an example, the number of bits in the indication field represents a total number of bits of the J pieces of spreading sequence information in the transmission unit. In an example, the number of bits in the indication field represents a total number of bits of the J pieces of second information and the J pieces of spreading sequence information in the transmission unit.

In an example embodiment, the number of bits in the indication field is an integer multiple of L, and the second communication node determines a sending time of the third information or a frequency-domain resource to be used for the third information according to the position of the second information corresponding to the first information in the J pieces of second information. In other words, the third information is transmitted through a corresponding time-domain resource or frequency-domain resource without spreading the third information using a spreading sequence.

In an example embodiment, the number of bits in the indication field is not an integer multiple of L, and the second communication node determines a spreading sequence to be used for the third information according to the position of the second information corresponding to the first information in the J pieces of second information. In other words, the third information is spread using a spreading sequence.

In an example embodiment, the number of bits in the indication field is an integer multiple of L, and the second communication node determines a spreading sequence to be used for the third information according to the position of the second information corresponding to the first information in the J pieces of second information. In other words, the third information is spread using a spreading sequence.

In an example embodiment, the number of bits in the indication field is not an integer multiple of L, and the second communication node determines a sending time of the third information or a frequency-domain resource to be used for the third information according to the position of the second information corresponding to the first information in the J pieces of second information. In other words, the third information is transmitted through a corresponding time-domain resource or frequency-domain resource without spreading the third information using a spreading sequence.

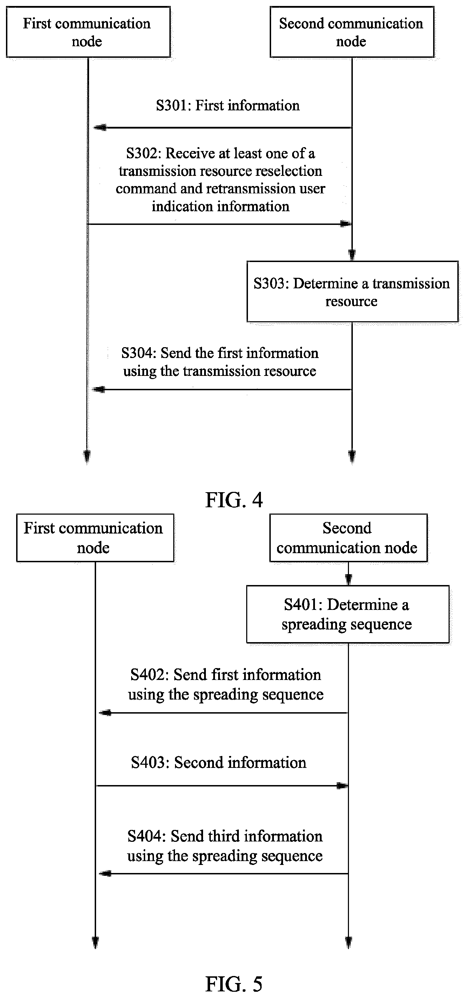

FIG. 4 is a schematic flowchart of an information transmission method according to an embodiment of the present disclosure. As shown in FIG. 4, the information transmission method includes the following steps S301 to S304.

At S301, a second communication node sends first information.

At S302, the second communication node receives at least one of a transmission resource reselection command and retransmission user indication information.

In an example embodiment, the first information sent by the second communication node is preceded by a preamble sequence, which may be used for time-domain synchronization of signals. If the first communication node detects a preamble sequence, it may be determined that first information exists.

In a possible embodiment, a plurality of second communication nodes send first information, which is spread using the same spreading sequence or is not spread, leading to mutual interference among the plurality of second communication nodes, resulting in the first communication node failing to detect valid first information. Therefore, when detecting a preamble sequence but not detecting first information, the first communication node may send at least one of a transmission resource reselection command and retransmission user indication information to the second communication node.

At S303, the second communication node determines a transmission resource, where the transmission resource includes at least one of: a time-domain resource, a frequency-domain resource, or a spreading sequence.

At S304, the second communication node sends the first information using the transmission resource.

In an example embodiment, the first communication node sends a transmission resource reselection command to one or more second communication nodes in one transmission unit; and after receiving the transmission resource reselection command, the second communication node reselects a transmission resource, and sends the first information using the reselected transmission resource.

In an example embodiment, the first communication node sends retransmission user indication information to one or more second communication nodes in one transmission unit, where the retransmission user indication information includes one or more spreading sequences; and after receiving the retransmission user indication information, the second communication node determines whether a spreading sequence previously used by the second communication node to send first information matches one of the one or more spreading sequences included in the retransmission user indication information, and if yes, reselects a transmission resource, and sends the first information using the reselected transmission resource.

In an example embodiment, the first communication node sends a transmission resource reselection command and retransmission user indication information to one or more second communication nodes in one transmission unit; and after receiving the transmission resource reselection command, the second communication node further determines whether a preamble sequence previously sent by the second communication node matches a preamble sequence included in the retransmission user indication information, and if yes, reselects a transmission resource, and sends the first information using the reselected transmission resource.

In an example embodiment, the retransmission user indication information indicates E preamble sequences, E being greater than or equal to 1; and the second communication node receives the E preamble sequences, and when one of the E preamble sequences is the same as a preamble sequence used by the second communication node to transmit the first information, determines a transmission resource and sends the first information using the transmission resource.

In an example embodiment, the retransmission user indication information indicates F spreading sequences, F being greater than or equal to 1; and the second communication node receives the F spreading sequences, and when one of the F spreading sequences is the same as a spreading sequence used by the second communication node to transmit the first information, determines a transmission resource and sends the first information using the transmission resource.

In this embodiment, the second communication node reselects at least one of a time-domain resource, a frequency-domain resource, or a spreading sequence for sending the first information to re-trigger the first communication node to allocate corresponding second information.

FIG. 5 is a schematic flowchart of an information transmission method according to an embodiment of the present disclosure. As shown in FIG. 5, the information transmission method includes the following steps S401 to S404.

At S401, a second communication node determines a spreading sequence.

At S402, the second communication node sends first information to a first communication node using the spreading sequence.

At S403, the second communication node receives second information sent by the first communication node.

At S404, in response to the second information being corresponding to the first information, the second communication node sends third information to the first communication node using the spreading sequence,
where the first information is different from the third information.

In an example embodiment, a second communication node spreads first information using a spreading sequence, and sends the spread first information to a first communication node; the first communication node receives the first information sent by the second communication node, generates second information corresponding to the first information, and sends the second information to the second communication node; and the second communication node receives the second information sent by the first communication node, determines whether the second information corresponds to the first information previously sent by the second communication node, and if yes, spreads the third information using the spreading sequence, and sends the spread third information to the first communication node.

In an example embodiment, a second communication node spreads first information using a spreading sequence, and sends the spread first information to a first communication node; the second communication node receives J pieces of second information sent by the first communication node, where J is greater than 1; and the second communication node respectively matches the first information against the J pieces of second information, and if a match is found, spreads the third information using the spreading sequence used for the first information, and sends the spread third information to the first communication node.

In this embodiment, the second communication node sends the first information to the first communication node using the spreading sequence, and when receiving, from the first communication node, the second information corresponding to the first information, sends the third information to the first communication node using the spreading sequence again. As such, information sent by a plurality of second communication nodes is distinguished by the spreading sequences, thereby improving the identification efficiency of the first communication node, reducing information conflicts, and increasing the network capacity.

The information transmission method provided in the embodiments of the present disclosure will be described in detail below through specific examples.

### Example 1

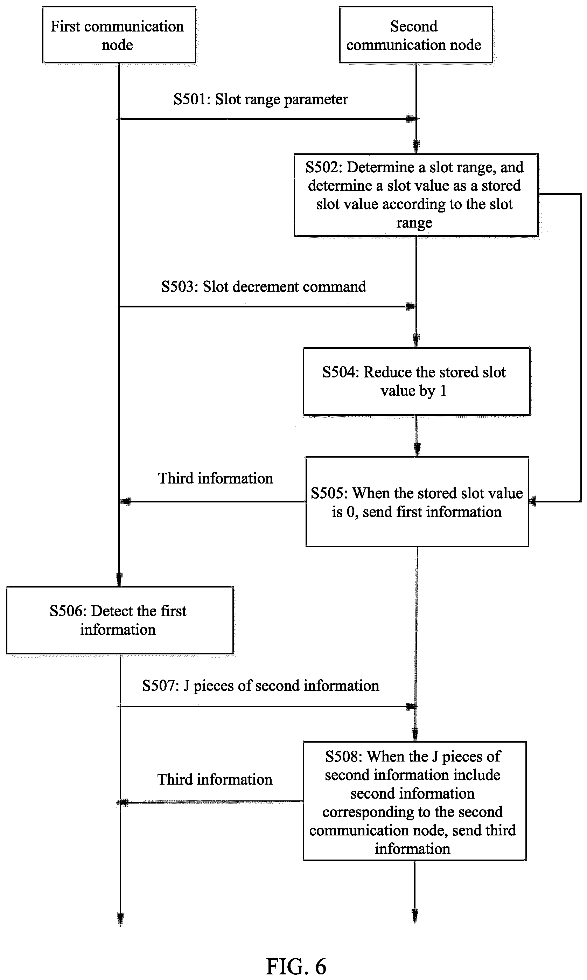

FIG. 6 is a schematic flowchart of an information transmission method according to Example 1 in embodiments of the present disclosure. As shown in FIG. 6, the information transmission method includes the following steps.

In a step of S501, a first communication node sends a slot range parameter.

For example, a slot range can be determined according to the slot range parameter. The slot range is a numerical range which may be, for example, 0 to N-1, N being greater than or equal to 1.

In a specific example, a variation step size of the slot range is determined according to at least one of: a number of spreading sequences, a slot range, or a number of conflicts. The number of spreading sequences is the number of available spreading sequences corresponding to a spreading sequence length. The number of spreading sequences may vary with different spreading sequence lengths. The slot range is determined according to a latest slot range parameter sent by the first communication node. The number of conflicts is the number of times the first communication node detects a preamble sequence but does not detect first information.

A larger number of spreading sequences indicates a larger variation step size of the slot range. For example, a reference coefficient multiplied by the number of spreading sequences is included in an equation for calculating the variation step size of the slot range. The reference coefficient is a predefined value or a value indicated by a parameter. Alternatively, a larger number of conflicts indicates a larger variation step size of the slot range. For example, a reference coefficient multiplied by the number of conflicts is included in an equation for calculating the variation step size of the slot range. Alternatively, when a maximum slot value in the slot range increases, the variation step size of the slot range decreases or remains unchanged.

In a step of S502, a second communication node determines a slot range according to the slot range parameter, and determines a slot value as a stored slot value according to the slot range.

For example, the second communication node may randomly select a slot value in the slot range as the stored slot value, e.g., randomly select a slot value from the slot range of 0 to N-1. The slot value is a numerical value. Optionally, the slot value may correspond to a time unit.

In a step of S503, the first communication node transmits a slot decrement command.

In a step of S504, after receiving the slot decrement command, the second communication node reduces the stored slot value by 1.

In a step of S505, when the stored slot value of the second communication node is reduced to 0 or when the slot value randomly selected by the second communication node from the slot range is 0, the second communication node sends first information to the first communication node.

For example, the second communication node may determine a spreading sequence, spread the first information using the determined spreading sequence, and sends the spread first information. Thus, different second communication nodes may send first information concurrently using different spreading sequences, thus achieving code-division multiplexing. The first communication node may detect first information based on a spreading sequence.

For example, the second communication node determines the spreading sequence according to an ID of the second communication node, for example, a spreading sequence serial number s determined by the second communication node is equal to mod(v, C), where v is a decimal value corresponding to n bits in the ID of the second communication node, and C is the number of available spreading sequences.

Alternatively, the second communication node randomly selects a spreading sequence, where the spreading sequence determined by the second communication node is the selected spreading sequence.

For example, whether to spread the first information using a spreading sequence may be indicated by the first parameter. If the first parameter indicates not to spread the first information using a spreading sequence, the second communication node sends the first information not spread by a spreading sequence.

In a step of S506, the first communication node detects first information.

For example, the first communication node at least may detect first information from a second communication node after sending the slot range parameter or each time after transmitting the slot decrement command.

For example, the first information includes a bit sequence having a length of L (L bits). For example, the first information includes a randomly generated sequence of 16 bits.

In a step of S507, the first communication node sends J pieces of second information.

For example, when the slot value is n, the first communication node detects first information sent by K second communication nodes, where n=0, 1, 2, ..., N-1, and K is greater than or equal to 1. The first communication node determines according to the third parameter that the number of pieces of second information that can be transmitted by one transmission unit is J, and sends J pieces of second information in one transmission unit, where 1≤J≤K, and the J pieces of second information correspond to J second communication nodes of the K second communication nodes.

For example, the transmission unit may be a physical channel, a data transmission block, or a command transmission block.

For example, the second information is confirmation information for the first information, and the J pieces of second information respectively correspond to the detected J pieces of first information, i.e., each piece of second information corresponds to one piece of first information.

For example, the confirmation information for the first information is the first information received by the first communication node. In other words, after receiving the first information, the first communication node sends the first information for confirmation, and if the second information received by the second communication node is the same as the sent first information, the second communication node determines that the second information corresponds to the second communication node, i.e., the second information including the first information corresponds to the second communication node.

In a step of S508, the second communication node determines whether the J pieces of second information include second information corresponding to the second communication node, and if yes, sends third information.

For example, the third information includes an ID of the second communication node.

For example, a transmission mode of the third information includes at least one of the following two modes.

Mode 1: The third information is transmitted by time-division multiplexing without spreading by a spreading sequence.

The second communication node receives J pieces of second information, determines whether the J pieces of second information include second information corresponding to the second communication node, and if yes, sends the third information.

The second communication node may determine a sending time for the third information according to the position of the second information corresponding to the second communication node among the J pieces of second information. The second communication node determines that the second information corresponding to the second communication node is an r-th piece of second information among the J pieces of second information, and determines to send the third information in a time T0+(r-1)T after the transmission of the J pieces of second information is completed, where 1≤r≤J, and T0 and T are each a predefined time length or a time length indicated by the fourth parameter.

In a specific example, a value of T0 is determined according to at least one of a subcarrier spacing, a type of the second communication node, or a capability parameter of the second communication node. At least one of the following is included: there is a correspondence between the subcarrier spacing and the value of T0; there is a correspondence between the type of the second communication node and the value of T0; or there is a correspondence between a value of the capability parameter of the second communication node and the value of T0.

In a specific example, a value of T is determined according to at least one of a subcarrier spacing, a type of the second communication node, and a capability parameter of the second communication node. At least one of the following is included: there is a correspondence between the subcarrier spacing and the value of T; and there is a correspondence between the type of the second communication node and the value of T, and there is a correspondence between a value of the capability parameter of the second communication node and the value of T.

In a specific example, J=K, i.e., the first communication node sends K pieces of second information in one transmission unit.

In another specific example, J=1, i.e., the first communication node sends one piece of second information in one transmission unit and sends K pieces of second information in K transmission units. The second communication node receives second information, and if the received second information corresponds to the second communication node, sends the third information. Serial numbers of the K pieces of second information are 0 to K-1. The first communication node sends one transmission unit, where the transmission unit includes one piece of second information, and a serial number of the second information is k. A second communication node corresponding to the second information having the serial number of k sends third information. The first communication node receives the third information. k=0, 1, 2, ..., K-1.

Mode 2: Third information is spread using a spreading sequence and transmitted concurrently.

The first communication node sends J pieces of second information among K pieces of second information and J pieces of spreading sequence information in one transmission unit, where 1≤J≤K. The spreading sequence information indicates a spreading sequence. The transmission unit may be a physical channel, a data transmission block, or a command transmission block.

For example, the J pieces of second information respectively correspond to the J pieces of spreading sequence information. A j-th piece of second information corresponds to a j-th spreading sequence, J=1, 2, 3, ..., J.

A second communication node receives the J pieces of second information; and if an r-th piece of second information among the J pieces of second information corresponds to the second communication node, spreads third information using a spreading sequence indicated by an r-th piece of spreading sequence information, and sends the spread third information, where 1≤r≤J. Because the spreading sequences used by the J second communication nodes are different, the second communication nodes can send third information concurrently, thus achieving code-division multiplexing.

In a specific example, J=K, i.e., the first communication node sends K pieces of second information and K pieces of spreading sequence information in one transmission unit.

For example, whether to spread the third information using a spreading sequence may be indicated by a second parameter. If the second parameter indicates not to spread the third information using a spreading sequence, the second communication node sends the third information using Mode 1 described above. If the second parameter indicates to spread the third information using a spreading sequence, the second communication node sends the third information using Mode 2 described above.

Alternatively, whether to spread the third information using a spreading sequence is determined according to a number of bits in an indication field. The indication field includes at least one of the J pieces of second information and the J pieces of spreading sequence information. L represents a number of bits of one piece of second information.

In a specific example, if the number of bits in the indication field is an integer multiple of L, the second communication node sends the third information using Mode 1 described above; and if the number of bits in the indication field is not an integer multiple of L, the second communication node sends the third information using Mode 2 described above.

In another specific example, if the number of bits in the indication field is an integer multiple of L, the second communication node sends the third information using Mode 2 described above; and if the number of bits in the indication field is not an integer multiple of L, the second communication node sends the third information using Mode 1 described above.

### Example 2

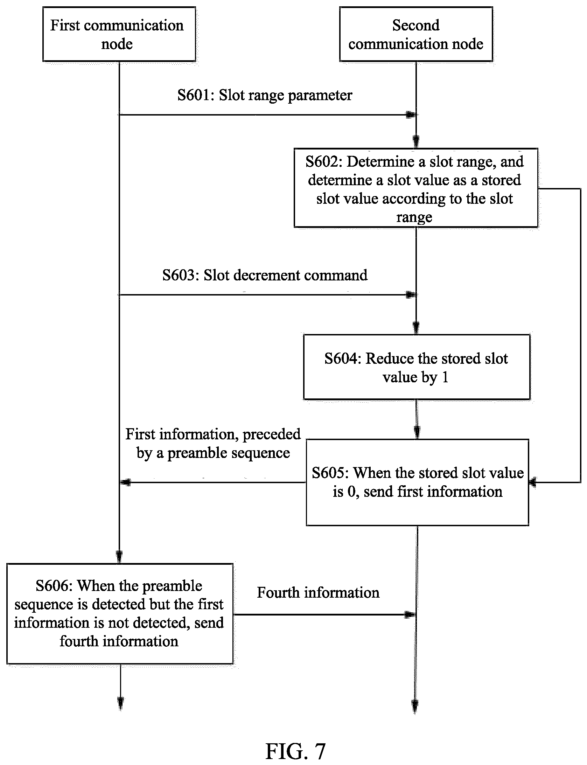

FIG. 7 is a schematic flowchart of an information transmission method according to an embodiment of the present disclosure. As shown in FIG. 7, the information transmission method includes the following steps.

In a step of S601, a first communication node sends a slot range parameter.

In a step of S602, a second communication node determines a slot range according to the slot range parameter, and determines a slot value as a stored slot value according to the slot range.

In a step of S603, the first communication node transmits a slot decrement command.

In a step of S604, after receiving the slot decrement command, the second communication node reduces the stored slot value by 1.

In a step of S605, when the stored slot value of the second communication node is reduced to 0 or when the slot value randomly selected by the second communication node from the slot range is 0, the second communication node sends first information to the first communication node.

The first information sent by the second communication node is preceded by a preamble sequence, and the first communication node may determine that the first information exists when detecting the preamble sequence.

In a step of S606, when the first communication node detects a preamble sequence but does not detect first information, the first communication node sends fourth information, where the fourth information includes at least one of: a transmission resource reselection command, retransmission user indication information, a slot decrement command, or a slot range parameter.

It can be understood that if a plurality of second communication nodes send first information, which is spread using the same spreading sequence or is not spread, mutual interference occurs among the plurality of second communication nodes, resulting in the first communication node failing to detect first information. Therefore, when the first communication node detects a preamble sequence but does not detect first information, the first communication node sends fourth information, where the fourth information is used for triggering the second communication node to send the first information again.

### Example 3

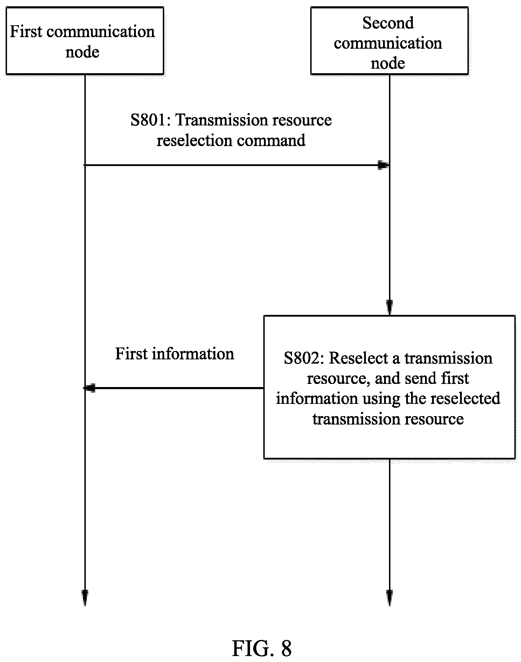

FIG. 8 is a schematic flowchart of an information transmission method according to an embodiment of the present disclosure. As shown in FIG. 8, the information transmission method includes the following steps.

In a step of S801, a first communication node sends a transmission resource reselection command.

For example, the transmission resource reselection command is sent for second communication nodes that have sent first information within a first time window, to instruct each of the second communication nodes to reselect a transmission resource. The transmission resource includes at least one of: a slot value, a frequency-domain resource, or a spreading sequence. The time-domain resource may be a slot value, millisecond, subframe, or other time-domain units. The frequency-domain resource may be a transmission subband, transport channel, physical resource block, subcarrier, or other frequency-domain units.

The first time window is within a first time-domain range. The first time-domain range is a time-domain range between an end moment of a slot decrement command and a start moment of an adjacent transmission resource reselection command. A time length of the first time window is less than or equal to that of the first time-domain range.

In a step of S802, the second communication node reselects a transmission resource according to the transmission resource reselection command, and sends the first information using the reselected transmission resource.

In a specific example, the transmission resource is a slot value; and the transmission resource reselection command indicates to reselect a slot value, including: reselecting a slot value from the remaining slot range, where the remaining slot range is 0 to N-1-D, where 0 to N-1 is the initial slot range, N-1 is the maximum slot value in the initial slot range, and D is the number of times the slot decrement command is sent after the latest slot range parameter. After receiving the transmission resource reselection command, the second communication node determines the remaining slot range of 0 to N-1-D; and determines a slot value as a stored slot value from the remaining slot range, e.g., randomly selects a slot value as the stored slot value from the remaining slot range of 0 to N-1-D.

In a specific example, the transmission resource is a frequency-domain resource; and the transmission resource reselection command indicates to reselect a frequency-domain resource, e.g., to reselect a transmission subband, transport channel, physical resource block, or subcarrier. After receiving the transmission resource reselection command, the second communication node determines a frequency-domain resource.

In a specific example, the transmission resource is a spreading sequence; and the transmission resource reselection command indicates to reselect a spreading sequence. After receiving the transmission resource reselection command, the second communication node determines a spreading sequence, e.g., randomly selects a spreading sequence, where the spreading sequence determined by the second communication node is the selected spreading sequence.

### Example 4

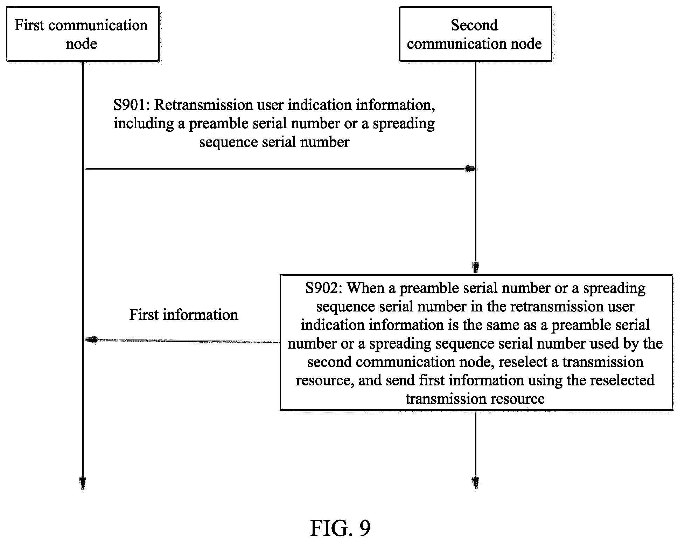

FIG. 9 is a schematic flowchart of an information transmission method according to an embodiment of the present disclosure. As shown in FIG. 9, the information transmission method includes the following steps.

In a step of S901, a first communication node sends retransmission user indication information.

In a step of S902, when a preamble serial number or a spreading sequence serial number in the retransmission user indication information is the same as a preamble serial number or a spreading sequence serial number used by a second communication node, the second communication node reselects a transmission resource, and send first information using the reselected transmission resource.

For example, the retransmission user indication information includes a preamble serial number or a spreading sequence serial number, and second communication nodes that need to reselect a transmission resource may be determined according to the retransmission user indication information. The second communication node receives the retransmission user indication information, and if determining that the preamble serial number or the spreading sequence serial number in the retransmission user indication information is the same as the preamble serial number or the spread serial number used by the second communication node, reselects a transmission resource to send the first information.

### Example 5

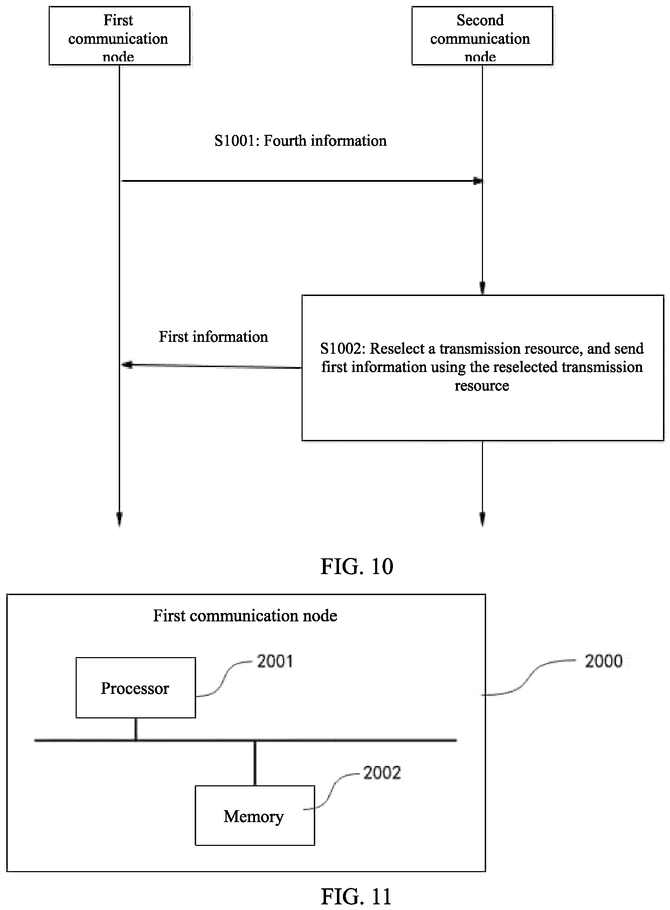

FIG. 10 is a schematic flowchart of an information transmission method according to an embodiment of the present disclosure. As shown in FIG. 10, the information transmission method includes the following steps.

In a step of S1001, a second communication node receives fourth information sent by a first communication node.

In a step of S1002, the second communication node reselects a transmission resource, and sends first information using the reselected transmission resource.

For example, if the second communication node has not received second information corresponding to the second communication node, the second communication node receives fourth information. The fourth information includes at least one of: a transmission resource reselection command, retransmission user indication information, a slot decrement command, or a slot range parameter.

The transmission resource at least includes one of: a time-domain resource, a frequency-domain resource, or a spreading sequence. The time-domain resource may be a slot value, millisecond, subframe, or other time-domain units. The frequency-domain resource may be a transmission subband, transport channel, physical resource block, subcarrier, or other frequency-domain units.

In a specific example, when the second communication node sends the first information and receives a transmission resource reselection command in a first time window, the second communication node redetermines a transmission resource, and sends the first information again based on the determined transmission resource.

In a specific example, when the second communication node sends the first information and receives a retransmission user indication information in a first time window, the second communication node reselects a transmission resource according to the transmission resource reselection command if determining that a preamble serial number in the retransmission user indication information is the same as a preamble serial number used for the first information or determining that a spreading sequence serial number in the retransmission user indication information is the same as a spreading sequence serial number used for the first information.

In a specific embodiment, the transmission resource is a slot value. After receiving the transmission resource reselection command, the second communication node determines the remaining slot range of 0 to N-1-D; and determines a slot value as a stored slot value from the remaining slot range, e.g., randomly selects a slot value as the stored slot value from the remaining slot range of 0 to N-1-D. When the stored slot value is 0, the second communication node sends the first information. 0 to N-1 is a slot range determined according to the latest slot range parameter, N-1 is the maximum slot value in the slot range, and D is the number of times of slot decrement after the latest slot range parameter.

In a specific example, the transmission resource is a frequency-domain resource, e.g., a transmission subband, transport channel, physical resource block, or subcarrier. After receiving the transmission resource reselection command, the second communication node determines a frequency-domain resource and sends the first information through the determined frequency-domain resource.

In a specific example, the transmission resource is a spreading sequence. After receiving the transmission resource reselection command, the second communication node determines a spreading sequence, e.g., randomly selects a spreading sequence, where the spreading sequence determined by the second communication node is the selected spreading sequence. The second communication node spreads the first information using the determined spreading sequence and sends the spread first information.

For example, the first time window is within a first time-domain range. The first time-domain range is a time-domain range between an end moment of a slot decrement command and a start moment of an adjacent spreading sequence reselection command. A time length of the first time window is less than or equal to that of the first time-domain range.

The first parameter, the second parameter, the third parameter, and the fourth parameter according to the embodiments of the present disclosure are each an information field including m bits, where m is greater than or equal to 1. The first parameter, the second parameter, the third parameter, and the fourth parameter may include the same or different numbers of bits.

It should be noted that in the above embodiments, the description in each embodiment has its own focus. For parts that are not detailed or set forth in one embodiment, reference may be made to the relevant descriptions in other embodiments.

Referring to FIG. 11, an embodiment of the present disclosure provides a first communication node. The first communication node 2000 includes, but is not limited to,
one or more processors 2001; and
a memory 2002, storing one or more programs which, when executed by the one or more processors, cause the one or more processors to implement the information transmission method executed by a first communication node according to any one of the above embodiments.

It should be noted that the processor 2001 and the memory 2002 may be connected by a bus or in other ways.

It can be understood that the processor 2001 may be a Central Processing Unit (CPU). The processor may also be other general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 2001 uses one or more integrated circuits for executing related programs to implement the technical schemes provided in the embodiments of the present disclosure.

The memory 2002, as a non-transitory computer-readable storage medium, may be configured for storing a non-transitory software program and a non-transitory computer-executable program, for example, the information transmission method executed by a first communication node according to any one of the embodiments of the present disclosure. The processor 2001 runs the non-transitory software program and the non-transitory computer-executable program stored in the memory 2002, to implement the information transmission method.

The memory 2002 may include a program storage area and a data storage area. The program storage area may store an operating system, and an application required by at least one function. The data storage area may store data and the like required for executing the information transmission method. In addition, the memory 2002 may include a high-speed random access memory, and may also include a non-transitory memory, e.g., at least one magnetic disk storage device, flash memory device, or other non-transitory solid-state storage device. In some implementations, the memory 2002 optionally includes memories located remotely from the processor 2001, and the remote memories may be connected to the processor 2001 via a network. Examples of the network include, but not limited to, the Internet, an intranet, a local area network, a mobile communication network, and combinations thereof.

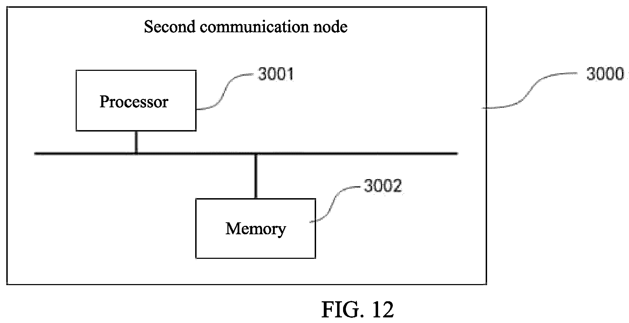

Referring to FIG. 12, an embodiment of the present disclosure provides a second communication node. The second communication node 3000 includes, but not limited to,
one or more processors 3001; and
a memory 3002, storing one or more programs which, when executed by the one or more processors, cause the one or more processors to implement the information transmission method executed by a second communication node according to any one of the above embodiments.

It should be noted that the processor 3001 and the memory 3002 may be connected by a bus or in other ways.

It can be understood that the processor 3001 may be a Central Processing Unit (CPU). The processor may also be other general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 3001 uses one or more integrated circuits for executing related programs to implement the technical schemes provided in the embodiments of the present disclosure.

The memory 3002, as a non-transitory computer-readable storage medium, may be configured for storing a non-transitory software program and a non-transitory computer-executable program, for example, the information transmission method executed by a second communication node according to any one of the embodiments of the present disclosure. The processor 3001 runs the non-transitory software program and the non-transitory computer-executable program stored in the memory 3002, to implement the information transmission method.

The memory 3002 may include a program storage area and a data storage area. The program storage area may store an operating system, and an application required by at least one function. The data storage area may store data and the like required for executing the information transmission method. In addition, the memory 3002 may include a high-speed random access memory, and may also include a non-transitory memory, e.g., at least one magnetic disk storage device, flash memory device, or other non-transitory solid-state storage device. In some implementations, the memory 3002 optionally includes memories located remotely from the processor 3001, and the remote memories may be connected to the processor 3001 via a network. Examples of the network include, but not limited to, the Internet, an intranet, a local area network, a mobile communication network, and combinations thereof.

An embodiment of the present disclosure provides a computer-readable storage medium. The computer-readable storage medium stores a computer program which, when executed by a processor, causes the processor to implement the information transmission method according to any one of the above embodiments.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (not exhaustive) of the computer-readable storage medium include: an electrical connection having one or more wires, a portable computer disk, a hard disk, a Random Access Memory (RAM), a Read-Only Memory (ROM), an erasable programmable Read-Only Memory (EPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the operations of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

An embodiment of the present disclosure provides a computer program product, including a computer program or a computer instruction stored in a computer-readable storage medium, where the computer program or the computer instruction, when read from the computer-readable storage medium and executed by a processor of a computer device, cause the computer device to execute the information transmission method according to any one of the above embodiments.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. An information transmission method, applied to a first communication node, the method comprising:
receiving J pieces of first information sent by J second communication nodes; and
sending J pieces of second information in one transmission unit, wherein the J pieces of second information and the J pieces of first information are in one-to-one correspondence, and J is greater than or equal to 1.

2. The method of claim 1, wherein the first communication node further sends J pieces of spreading sequence information in the transmission unit.

3. The method of claim 2, wherein the J pieces of second information and the J pieces of spreading sequence information are arranged in the transmission unit in any of the following manners:
the second information and the spreading sequence information are sequentially alternately arranged in the transmission unit;
or
the spreading sequence information and the second information are sequentially alternately arranged in the transmission unit;
or
the J pieces of second information are arranged before the J pieces of spreading sequence information;
or
the J pieces of spreading sequence information are arranged before the J pieces of second information.

4. The method of claim 1 or 2, wherein the number J of pieces of second information sent in the transmission unit is indicated by a third parameter.

5. The method of claim 1, wherein before receiving J pieces of first information sent by J second communication nodes, the method further comprises:
sending a first parameter, wherein the first parameter indicates whether to spread the first information using a spreading sequence.

6. An information transmission method, applied to a second communication node, the method comprising:
sending first information;
receiving a transmission unit, wherein the transmission unit comprises J pieces of second information;
determining a transmission resource according to a position of the second information corresponding to the first information in the J pieces of second information; and
sending third information using the transmission resource.

7. The method of claim 6, wherein the transmission resource comprises at least one of: a sending time, a frequency-domain resource, and a spreading sequence.

8. The method of claim 6, wherein the transmission resource is a sending time, and determining a transmission resource according to a position of the second information corresponding to the first information in the J pieces of second information comprises:
determining a sending time of the third information according to the position of the second information corresponding to the first information in the J pieces of second information.

9. The method of claim 8, wherein determining a sending time of the third information according to the position of the second information corresponding to the first information in the J pieces of second information comprises:
in response to the second information corresponding to the first information being an r-th piece of second information among the J pieces of second information, determining to send the third information after a delay of T0+(r-1)T after transmission of the transmission unit is completed, wherein 1≤r≤J, and T0 and T are each a preset time length or a time length indicated by a fourth parameter.

10. The method of claim 9, wherein a value of T0 is determined according to at least one of a subcarrier spacing and a type of the second communication node; or a value of T is determined according to at least one of a subcarrier spacing and a type of the second communication node.

11. The method of claim 6, wherein the transmission resource is a spreading sequence, and determining a transmission resource according to a position of the second information corresponding to the first information in the J pieces of second information comprises:
in response to the second information corresponding to the first information being an r-th piece of second information among the J pieces of second information, determining to use a spreading sequence having a serial number of r-1 for the third information, wherein 1≤r≤J.

12. The method of claim 6, wherein the transmission resource is a spreading sequence, and the transmission unit further comprises J pieces of spreading sequence information.

13. The method of claim 12, wherein determining a transmission resource according to a position of the second information corresponding to the first information in the J pieces of second information comprises:
in response to the second information corresponding to the first information being an r-th piece of second information among the J pieces of second information, determining to use a spreading sequence indicated by an r-th piece of spreading sequence information among the J pieces of spreading sequence information for the third information, wherein 1≤r≤J.

14. The method of claim 12, wherein the method further comprises one of:
in response to a number of bits in an indication field being an integer multiple of L, determining a sending time of the third information or a frequency-domain resource to be used for the third information according to the position of the second information corresponding to the first information in the J pieces of second information;
or
in response to a number of bits in an indication field being not an integer multiple of L, determining a spreading sequence to be used for the third information according to the position of the second information corresponding to the first information in the J pieces of second information;
or
in response to a number of bits in an indication field being an integer multiple of L, determining a spreading sequence to be used for the third information according to the position of the second information corresponding to the first information in the J pieces of second information;
or
in response to a number of bits in an indication field being not an integer multiple of L, determining a sending time of the third information or a frequency-domain resource to be used for the third information according to the position of the second information corresponding to the first information in the J pieces of second information,
wherein the indication field comprises at least one of the J pieces of second information and the J pieces of spreading sequence information, and L represents a number of bits of one piece of second information.

15. An information transmission method, applied to a second communication node, the method comprising:
sending first information;
receiving at least one of a transmission resource reselection command and retransmission user indication information; and
determining a transmission resource and sending the first information using the transmission resource, wherein the transmission resource comprises at least one of: a time-domain resource, a frequency-domain resource, or a spreading sequence.

16. The method of claim 15, wherein the retransmission user indication information indicates E preamble sequences, E being greater than or equal to 1; and the method further comprises:
in response to one of the E preamble sequences being the same as a preamble sequence used by the second communication node to transmit the first information, determining the transmission resource; and
sending the first information using the transmission resource.

17. The method of claim 15, wherein the retransmission user indication information indicates F spreading sequences, F being greater than or equal to 1; and the method further comprises:
in response to one of the F spreading sequences being the same as a spreading sequence used by the second communication node to transmit the first information, determining the transmission resource; and
sending the first information using the transmission resource.

18. An information transmission method, applied to a second communication node, the method comprising:
determining a spreading sequence;
sending first information to a first communication node using the spreading sequence;
receiving second information sent by the first communication node; and
in response to the second information being corresponding to the first information, sending third information to the first communication node using the spreading sequence,
wherein the first information is different from the third information.

19. A first communication node, comprising:
one or more processors; and
a memory, storing one or more programs which, when executed by the one or more processors, cause the one or more processors to perform the information transmission method of any one of claims 1 to 5.

20. A second communication node, comprising:
one or more processors; and
a memory, storing one or more programs which, when executed by the one or more processors, cause the one or more processors to perform the information transmission method of any one of claims 6 to 14, or the information transmission method of any one of claims 15 to 17, or the information transmission method of claim 18.

21. A computer-readable storage medium, having a computer program stored therein, the computer program, when executed by a processor, causing the processor to perform the information transmission method of any one of claims 1 to 5, or the information transmission method of any one of claims 6 to 14, or the information transmission method of any one of claims 15 to 17, or the information transmission method of claim 18.

22. A computer program product, comprising a computer program or a computer instruction stored in a computer-readable storage medium, wherein the computer program or the computer instruction, when read from the computer-readable storage medium and executed by a processor of a computer device, causes the computer device to perform the information transmission method of any one of claims 1 to 5, or the information transmission method of any one of claims 6 to 14, or the information transmission method of any one of claims 15 to 17, or the information transmission method of claim 18.
